(19) Europäisches Patentamt
European Patent Office
Office européen des brevets

(11) Veröffentlichungsnummer: **0 242 658 B1**

(12) **EUROPÄISCHE PATENTSCHRIFT**

(45) Veröffentlichungstag der Patentschrift: **10.04.91**

(51) Int. Cl.⁵: **H01S 3/038**, H01S 3/0975

(21) Anmeldenummer: **87104902.9**

(22) Anmeldetag: **02.04.87**

(54) **Gaslaser mit einem in Axialrichtung vom Gas durchströmten Entladungsrohr.**

(30) Priorität: **18.04.86 DE 8610693 U**

(43) Veröffentlichungstag der Anmeldung:
**28.10.87 Patentblatt 87/44**

(45) Bekanntmachung des Hinweises auf die
Patenterteilung:
**10.04.91 Patentblatt 91/15**

(84) Benannte Vertragsstaaten:
**AT BE CH DE FR GB IT LI SE**

(56) Entgegenhaltungen:
**EP-A- 0 126 316      EP-A- 0 152 084
EP-A- 0 177 888      DE-A- 2 042 613
US-A- 4 363 126      US-A- 4 423 510**

**SOVIET JOURNAL OF QUANTUM ELECTRO-
NICS, Band 14, Nr. 4, April 1984, Seiten
558-560, American Institute of Physics, New
York, US; V.Y. BARANOV et al.: "Increase in
the repetition frequency of XeCl laser pulses
to 1 kHz"**

**PATENT ABSTRACTS OF JAPAN, Band 7. Nr.
40 (E-159)[1185], 17. Februar 1983; & JP-A-57
192 091 (FUJITSU K.K.) 26-11-1982**

(73) Patentinhaber: **Rofin-Sinar Laser GmbH
Berzeliusstrasse 87
W-2000 Hamburg 74(DE)**

(72) Erfinder: **Martinen, Hinrich, Dipl.-Phys.
Lindenstrasse 6
W-2085 Quickborn(DE)**
Erfinder: **Knobbe, Karl-Heinz
Am Teich 7
W-2087 Ellerbek(DE)**
Erfinder: **Simonsson, Samuel Sture, Dipl.-Ing.
Luhering 23
W-2090 Winsen-Bahlburg(DE)**
Erfinder: **Wirth, Peter, Dr. Dipl.-Phys.
Birkengrund 1
W-2090 Winsen/Luhe(DE)**

(74) Vertreter: **Glawe, Delfs, Moll & Partner Patentanwälte
Postfach 26 01 62 Liebherrstrasse 20
W-8000 München 26(DE)**

## Beschreibung

Die Erfindung betrifft einen Gaslaser mit einem in Axialrichtung vom Gas durchströmten Entladungsrohr, an dem außen Hochfrequenzelektroden angebracht sind, und mit einem Hochfrequenzgenerator.

Bei einem solchen Gaslaser (EP-A-0 152 084) wird die Hochfrequenzleistung über die Elektroden kapazitiv in das anzuregende Gas eingekoppelt. Bisher war zu diesem Zweck immer die Leistungsendstufe über verhältnismäßig lange Leitungen, zum Beispiel Koaxialleitungen, mit den Elektroden verbunden, da man es nicht für möglich gehalten hat, die Leistungsendstufe in der Nähe des Entladungsrohrs anzubringen. Dabei trat aber der Nachteil auf, daß zunächst eine Impedanztransformation am Ausgang der Leistungsendstufe durchgeführt werden mußte, um eine Anpassung an die Impedanz der Leitungen, zum Beispiel des Koaxialkabels zu erhalten, die zum Beispiel 50 Ohm oder 75 Ohm betragen kann. Am Ende der Leitung oder des Koaxialkabels war dann eine erneute Impedanzanpassung bzw. Transformation notwendig, um so das Signal aus dem Kabel optimal in die Hochfrequenzelektroden einzukoppeln, mit denen das Gas angeregt werden soll.

Diese zweimalige Impedanzanpassung bzw. -transformation ist sehr umständlich und führt leicht zu nicht idealer Anpassung und Leistungsverlusten. Außerdem treten Verluste in den Leitungen, zum Beispiel Koaxialkabeln auf.

Die Aufgabe der Erfindung besteht darin, einen verbesserten Gaslaser zu schaffen, der einfachen Aufbau hat und bei dem die Hochfrequenzverluste minimalisiert sind.

Die erfindungsgemäße Lösung besteht darin, daß die Leistungsendstufe des Hochfrequenzgenerators im Gehäuse des Laserresonators angeordnet ist und über Impedanzanpassungselemente direkt mit den Elektroden verbunden ist, und daß der Laser mehrere, in Längsrichtung des Entladungsrohrs hintereinander angeordnete Elektroden aufweist, die an eine gemeinsame, sich längs des Entladungsrohrs erstreckende erste Platte angeschlossen sind, die als der eine Belag eines Impedanzanpassungselements in Form eines Plattenkondensators ausgebildet ist, dessen anderer plattenförmiger Belag an den Hochfrequenzgenerator angeschlossen ist

Es ist bekannt, bei einer gepulsten Hochspannungsentladung eines modularen Gaslasers die Endstufe sehr kompakt auszubilden und im Gehäuse des Laserresonators anzuordnen (EP-A-0 126 316). Die erfindungsgemäße Elektrodenanordnung bringt den Vorteil mit sich, daß man ein größeres Gasvolumen anregen und damit eine höhere Leistung des Lasers erhalten kann.

Es sind also in Richtung des Entladungsrohres mehrere Elektroden hintereinandergeschaltet. Die Probleme, daß dann verschieden lange Leitungen zwi schen Hochfrequenzgenerator und den einzelnen Elektroden erforderlich sind, werden dadurch vermieden, daß die sich längs des Entladungsrohrs erstreckende erste Platte vorgesehen wird, an die dann die einzelnen Elektroden angeschlossen sind. Diese Platte bildet den einen Belag eines Impedanzanpassungselements in Form eines Plattenkondensators. Der andere plattenförmige Belag des Plattenkondensators ist dann am Hochfrequenzgenerator angeschlossen.

Ist die als anderer Belag ausgebildete zweite Platte gegenüber der ersten Platte beweglich angeordnet, so kann hier die Ankopplung variiert werden, um so die in das Gas eingestrahlte Hochfrequenzleistung zu variieren.

Wenn sich das Gas in Richtung der Elektroden bewegt, so tritt bei hoher Leistung bzw. zu guter Ankopplung das Problem auf, daß sich das Plasma so stark erwärmt, daß es leitend wird. Nachdem das Plasma sich eine gewisse Strecke zwischen zwei Elektroden hindurchbewegt hat, wird dann an der Stelle, an der es entsprechend heiß ist, sozusagen ein Kurzschluß für die Hochfrequenz erzeugt, so daß diese Hochfrequenz zumindest teilweise zusammenbricht. Dies bedeutet natürlich, daß das nachfolgende Plasma nicht mehr angeregt wird, bis sich wieder der alte Zustand eingestellt hat. Diese Instabilitäten können vermieden werden, wenn die Elektroden so angeordnet sind, daß ihr Abstand vom Entladungsrohr in Längsrichtung desselben variiert. Insbesondere können die Probleme besonders gut vermieden werden, wenn der Abstand in Strömungsrichtung des Gases anwächst.

An der Stelle, an der das Gas zwischen den Elektroden eintritt, wird es zunächst sehr stark angeregt, da hier der Abstand der Elektroden vom Gas besonders klein und damit die Ankopplung besonders groß ist. Im weiteren Verlauf des Gases zwischen den Elektroden nimmt dabei die Ankopplung ab, so daß die erwähnten Probleme des "Kurzschlusses" nicht mehr oder nur noch in zu vernachlässigendem Umfang auftreten.

Bei einer vorteilhaften Ausführungsform ist vorgesehen, daß der Abstand linear anwächst. Selbstverständlich sind aber auch andere Funktionen möglich, mit denen der Abstand anwachsen kann.

Ist der Raum zwischen dem Entladungsrohr und den Elektroden im Bereich der in Strömungsrichtung des Gases gesehenen Vorderkanten derselben mit einem Material hoher Dielektrizitätskonstante gefüllt, so erreicht man hier an der Stelle, an denen das Gas zwischen den Elektroden eintritt, eine besonders hohe Feldstärke der HF-Leistung und damit eine besonders gute Ankopplung und Anregung des Gases. Dabei kann das Material hoher Dielektrizitätskonstante Ringform haben. Die relative Dielektrizitätskonstante des Gases hat dabei vorteilhafterweise einen Wert, der größer ist als 2.

Sieht man mehrere Elektroden hintereinander vor, so kann die Wellenlänge der Hochfrequenzschwingungen eine nicht mehr gegenüber der Resonatorlänge zu vernachlässigende Größe haben. Aus diesem Grunde kann die Ankopplung an verschiedenen Stellen des Entladungsrohres bzw der ersten Platte unterschiedlich sein. Diese Probleme können vermieden werden, wenn die sich längs des Entladungsrohrs erstreckende erste Platte mit Induktivitäten verbunden ist. Auf diese Weise werden die Nachteile der geometrischen Anordnung vermieden, die darauf beruhen, daß das Entladungsrohr eine Länge hat, die mit der Wellenlänge der Hochfrequenzleistung vergleichbar ist.

Ist der Laserresonator und die Leistungsendstufe des Hochfrequenzgenerators von einem elektrisch leitenden Gehäuse umgeben, so kann durch diese einfache mechanische Maßnahme eine wirksame Hochfrequenzabschirmung erreicht werden, daß keine oder nur sehr wenig störende Hochfrequenzstrahlung nach außen gelangen kann.

Bei einer vorteilhaften Ausführungsform sind die Elektroden verstellbar. So kann bei einer vorteilhaften Ausführungsform der Abstand der Elektroden vom Entladungsrohr einstellbar sein. Aber auch der Winkel zwischen Elektroden und Entladungsrohr kann einstellbar sein, damit man die oben erwähnten Vorteile des in Strömungsrichtung des Gases anwachsenden Abstandes zwischen Elektroden und Entladungsrohr erhalten und auf den optimalen Wert einstellen kann. Die Elektroden können aber auch auf dem Entladungsrohr verdrehbar angeordnet sein, so daß sie (bei ausgeschalteter Hochfrequenz) verdreht werden können oder auch während des Betriebes mit besonderen Einstelleinrichtungen verstellt werden können. Auf diese Weise kann durch gegenseitiges Verdrehen der Elektroden über die gesamte Strecke des Entladungsrohres die optimale Anregung eingestellt werden.

Die Erfindung wird im folgenden anhand von vorteilhaften Ausführungsformen unter Bezugnahme auf die Zeichnung beschrieben. Es zeigen:

Fig. 1     im Querschnitt einen Gaslaser mit im Gehäuse des Laserresonators angeordneter Leistungsendstufe;

Fig. 2     in schematischer Darstellung die Anordnung wesentlicher Teile eines Gas-Lasers als Aus führungsform der Erfindung; und

Fig. 3     eine ähnliche Anordnung wie in Fig. 2.

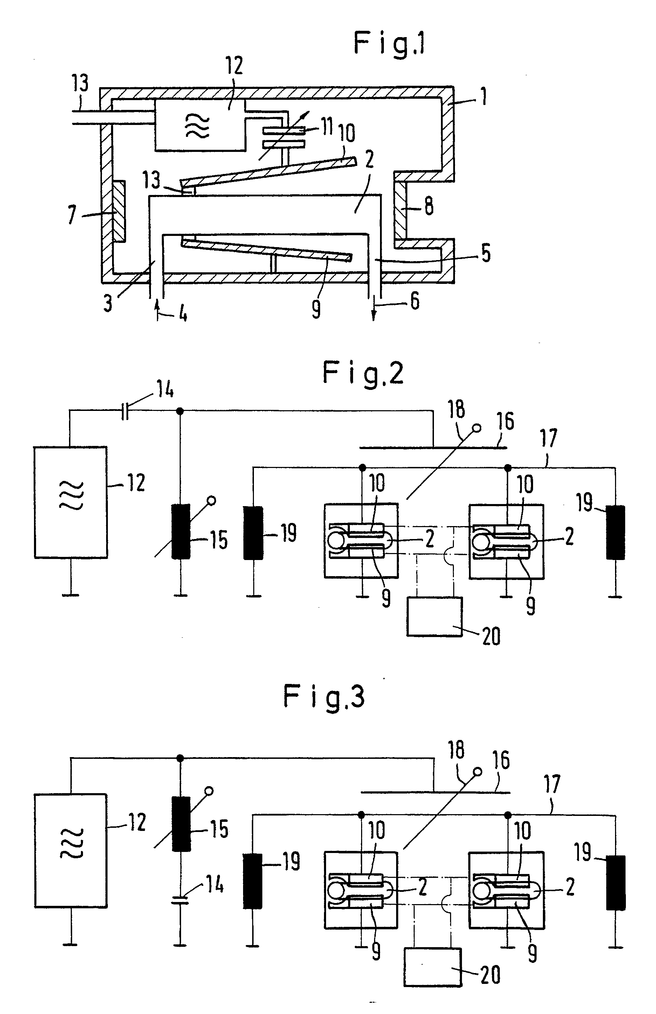

Der Gaslaser der Fig. 1 weist ein Gehäuse 1 aus elektrisch leitendem Material auf, in dem sich ein Entladungsrohr 2 befindet, durch das anzuregendes Gas hindurchgeleitet wird. Zu diesem Zweck besitzt das Entladungsrohr 2 einen rohrförmigen Anschluß 3, durch den Gas in Richtung des Pfeiles 4 hineingeleitet werden kann. Außerdem besitzt es einen rohrförmigen Auslaß 5, durch den das Gas in Richtung des Pfeiles 6 wieder herausströmen kann. Links an der Wand des Gehäuses ist ein undurchlässiger Spiegel 7, rechts ist ein halbdurchlässiger Spiegel 8 angeordnet, die parallel so zueinander ausgerichtet sind, daß zwischen ihnen die Laserwirkung des Gases im Entladungsrohr 2 auftreten kann, wobei dann das Laserlicht durch den halbdurchlässigen Spiegel 8 nach rechts heraustritt.

Angeregt wird das Gas im Entladungsrohr 2 durch zwei einander gegenüber angeordnete Elektroden 9 und 10, von denen die Elektrode 10 über ein Impedanzanpassungselement 11 an die Leistungsendstufe eines Hochfrequenzgenerators 12 angeschlossen ist. Weitere für die Impedanzanpassung erforderliche Elemente wie z.B. eine Induktivität können z.B. innerhalb der Leistungsendstufe 12 vorgesehen sein. Die Hochfrequenzleistungs-Endstufe wird über Leitungen 13 mit Hochfrequenz von einem Hochfrequenzoszillator und/oder mit elektrischer Energie versorgt.

Die Elektroden 9 und 10 weisen einen Abstand vom Entladungsrohr 2 auf, der sich in Strömungsrichtung des Gases von links nach rechts vergrößert, wie dies in Fig. 1 schematisch dargestellt ist. Außerdem befindet sich zwischen dem Entladungsrohr 2 und den Elektroden 9, 10 in der Figur links, d.h. an der Einströmseite des Gases ein ringförmiges Element 13 hoher Dielektrizitätskonstante, durch das die Hochfrequenzfeldstärke hier weiter erhöht wird.

Das von links einströmende Gas wird daher links im Bereich der Elektroden sehr stark angeregt, während auf dem weiteren Strömungsweg die Ankopplung und damit die übertragende Hochfrequenzleistung kleiner wird, so daß Instabilitäten wegen zu großer Erwärmung des Gases bzw Plasmas nicht auftreten können.

In den Fig. 2 und 3 ist eine Anordnung gezeigt, in der mehrere Elektrodenpaare 9, 10 hintereinander vorgesehen sind. Das Entladungsrohr 2 ist dabei nur teilweise gezeigt, nämlich als zwei hintereinander liegende Stücke, die aber in Wirklichkeit selbstverständlich miteinander verbunden sind. Wie man den Figuren entnehmen kann, sind die Elektroden 9 und 10 dabei auch nicht als einfache Platten aufgebaut, wie man dies aus Fig. 1 entnehmen kann, sondern umschließen das Entladungsrohr 2 teilweise.

Die Versorgung mit Hochfrequenzenergie erfolgt ebenfalls durch eine Hochfrequenzleistungsendstufe 12, an die eine Impedanzanpassungsschaltung aus einem Kondensator 14 und einer veränderlichen Induktivität 15, die in Reihe geschaltet sind, angeschlossen ist.

Von dort gelangt die Hochfrequenzleistung auf eine Platte 16 eines Plattenkondensators, dessen anderer Belag durch die weitere Platte 17 gebildet wird. Die Platte 16 ist dabei zur Änderung der Kapazität und damit zur Änderung der Anpassung beweglich, was durch das bekannte Schaltsymbol, das mit 18 bezeichnet ist, angedeutet wird.

An die Platte 17 sind nun die Elektroden 10 angeschlossen. Da die Platte 17 eine Länge haben kann, die mit der Wellenlänge der Hochfrequenz vergleichbar wird, sind zusätzlich an die Platte 17 noch Induktivitäten 19 angeschlossen, damit für alle Elektroden eine ungefähr gleich gute Anpassung erreicht werden kann.

In den Fig. 2 und 3 ist mit 20 eine Verstelleinrichtung für die Elektroden dargestellt. Durch diese Verstelleinrichtung 20 kann z.B. der Abstand der Elektroden 9, 10 vom Entladungsrohr 2 eingestellt werden. Durch die Einrichtungen 20 kann auch der Winkel zwischen Elektroden und Entladungsrohr eingestellt werden. Schließlich können die Einrichtungen 20 so angeordnet sein, daß die Elektroden auf dem Entladungsrohr verdreht werden können. Die Einrichtung 20 kann dabei eine einfache manuelle Verstellmöglichkeit sein, die bei ausgeschalteter Hochfrequenz von Hand betätigt wird. Es kann sich aber auch um von außen zu betätigende Antriebe handeln, die auch bei eingeschalteter Hochfrequenz betätigt werden können, um so bei laufendem Laser die Leistung zu optimieren.

## Ansprüche

1. Gaslaser mit einem in Axialrichtung vom Gas durchströmten Entladungsrohr, an dem außen Hochfrequenzelektroden angebracht sind, und mit einem Hochfrequenzgenerator, dadurch gekennzeichnet, daß die Leistungsendstufe (12) des Hochfrequenzgenerators im Gehäuse (1) des Laserresonators (2, 7, 8) angeordnet ist und über Impedanzanpassungselemente (11, 14 bis 18) direkt mit den Elektroden (9, 10) verbunden ist, und daß der Laser mehrere, in Längsrichtung des Entladungsrohrs (2) hintereinander angeordnete Elektroden (9, 10) aufweist, die an eine gemeinsame, sich längs des Entladungsrohrs (2) erstreckende erste Platte (17) angeschlossen sind, die als der eine Belag eines Impedanzanpassungselements in Form eines Plattenkondensators (16, 17, 18) ausgebildet ist, dessen anderer plattenförmiger Belag (16) an den Hochfrequenzgenerator angeschlossen ist.

2. Gaslaser nach Anspruch 1, dadurch gekennzeichnet, daß eine als der andere Belag ausgebildete zweite Platte (16) gegenüber der ersten beweglich angeordnet ist.

3. Gaslaser nach Anspruch 1 oder 2, dadurch gekennzeichnet, daß die Elektroden (9, 10) so angeordnet sind, daß ihr Abstand vom Entladungsrohr (2) in Längsrichtung desselben variiert.

4. Gaslaser nach Anspruch 3, dadurch gekennzeichnet, daß der Abstand in Strömungsrichtung des Gases anwächst.

5. Gaslaser nach Anspruch 4, dadurch gekennzeichnet, daß der Abstand linear anwächst.

6. Gaslaser nach einem der Ansprüche 1 bis 5, dadurch gekennzeichnet, daß der Raum zwischen dem Entladungsrohr (2) und den Elektroden (9, 10) im Bereich der in Strömungsrichtung des Gases gesehen Vorderkanten derselben mit einem Material (13) hoher Dielektrizitätskonstante gefüllt ist.

7. Gaslaser nach Anspruch 6, dadurch gekennzeichnet, daß das Material (13) hoher Dielektrizitätskonstante Ringform hat.

8. Gaslaser nach Anspruch 6 oder 7, dadurch gekennzeichnet, daß die relative Dielektrizitätskonstante des ringförmigen Materials (13) größer als 2 ist.

9. Gaslaser nach einem der Ansprüche 1 bis 8, dadurch gekennzeichnet, daß die Elektroden (9, 10) verstellbar sind.

10. Gaslaser nach Anspruch 9, dadurch gekennzeichnet, daß der Abstand der Elektroden (9, 10) vom Entladungsrohr (2) einstellbar ist.

11. Gaslaser nach einem der Ansprüche 3 bis 10, dadurch gekennzeichnet, daß der Winkel zwischen Elektroden (9, 10) und Entladungsrohr (2) einstellbar ist.

12. Gaslaser nach einem der Ansprüche 1 bis 11, dadurch gekennzeichnet, daß die Elektroden (9, 10) auf dem Entladungsrohr verdrehbar angeordnet sind.

## Claims

1. A gas laser with a discharge tube through which the gas flows in axial direction, to which high-frequency electrodes are applied externally, and having a high-frequency generator, characterised in that the power output stage (12) of the high-frequency generator is disposed in the housing (1) of the laser resonator (2, 7, 8) and is connected directly to the electrodes (9, 10) via impedance matching elements (11, 14 to 18), and in that the laser has a plurality of electrodes (9, 10) arranged one behind the other in the longitudinal direction of the discharge tube (2) and connected to a common first plate (17) which extends along the discharge tube (2) and which is formed as one layer of an impedance matching element in the form of a plate capacitor (16, 17, 18), of which the other plate-like layer (16) is connected to the high-frequency generator.

2. A gas laser according to claim 1, characterised in that the second plate (16) formed as the other layer is disposed movably relative to the first one.

3. A gas laser according to claim 1 or 2, characterised in that the electrodes (9, 10) are so arranged that their distance from the discharge tube (2) varies in the longitudinal direction thereof.

4. A gas laser according to claim 3, characterised in that the distance increases in the direction of gas flow.

5. A gas laser according to claim 4, characterised in that the distance increases linearly.

6. A gas laser according to any one of claims 1 to 5, characterised in that the space between the discharge tube (2) and the electrodes (9, 10), in the vicinity of the front edges thereof (viewed in the direction of gas flow), is filled with a material (13) having a high dielectric constant.

7. A gas laser according to claim 6, characterised in that the material (13) having a high dielectric constant is of annular shape.

8. A gas laser according to claim 6 or 7, characterised in that the relative dielectric constant of the annular material (13) is higher than 2.

9. A gas laser according to any one of claims 1 to 8, characterised in that the electrodes (9, 10) are adjustable.

10. A gas laser according to claim 9, characterised in that the distance of the electrodes (9, 10) from the discharge tube (2) is adjustable.

11. A gas laser according to any one of claims 3 to 10, characterised in that the angle between the electrodes (9, 10) and the discharge tube (2) is adjustable.

12. A gas laser according to any one of claims 1 to 11, characterised in that the electrodes (9, 10) are mounted to rotate on the discharge tube.

**Revendications**

1. Laser à gaz avec un tube de décharge parcouru par le gaz dans le sens axial, auquel sont fixées des électrodes haute fréquence extérieures, et avec un générateur haute fréquence, caractérisé en ce que l'étage final de puissance (12) du générateur haute fréquence est disposé dans le carter (1) du résonateur laser (2, 7, 8) et est relié directement aux électrodes (9, 10) par l'intermédiaire d'éléments d'adaptation d'impédance (11, 14 à 18), et en ce que le laser présente plusieurs électrodes (9, 10) disposées l'une derrière l'autre dans le sens longitudinal du tube de décharge (2), ces électrodes étant reliées à une première plaque (17) commune qui s'étend le long du tube de décharge (2) et qui est conçue comme une armature d'un élément d'adaptation d'impédance sous forme de condensateur à plaques (16, 17, 18), dont l'autre armature (16) en forme de plaque est raccordée au générateur haute fréquence.

2. Laser à gaz suivant la revendication 1, caractérisé en ce qu'une deuxième plaque (16) conçue comme l'autre armature est disposée de manière mobile en face de la première.

3. Laser à gaz suivant la revendication 1 ou 2, caractérisé en ce que les électrodes (9, 10) sont disposées de telle manière que leur écart par rapport au tube de décharge (2) varie dans le sens longitudinal de celui-ci.

4. Laser à gaz suivant la revendication 3, caractérisé en ce que l'écart augmente dans le sens d'écoulement du gaz.

5. Laser à gaz suivant la revendication 4, caractérisé en ce que l'écart croît de manière linéaire.

6. Laser à gaz suivant l'une des revendications 1 à 5, caractérisé en ce que l'espace entre le tube de décharge (2) et les électrodes (9, 10) est rempli d'une matière (13) à constante diélectrique élevée dans la zone des bords avant de celles-ci vues dans le sens d'écoulement du gaz.

7.  Laser à gaz suivant la revendication 6, caractérisé en ce que la matière (13) à constante diélectrique élevée à une forme annulaire.

8.  Laser à gaz suivant la revendication 6 ou 7, caractérisé en ce que la constante diélectrique relative de la matière (13) de forme annulaire est supérieure à 2.

9.  Laser à gaz suivant l'une des revendications 1 à 8, caractérisé en ce que les électrodes (9, 10) sont réglables.

10. Laser à gaz suivant la revendication 9, caractérisé en ce que l'écart entre les électrodes (9, 10) et le tube de décharge (2) est ajustable.

11. Laser à gaz suivant l'une des revendications 3 à 10, caractérisé en ce que l'angle entre les électrodes (9, 10) et le tube de décharge (2) est ajustable.

12. Laser à gaz suivant l'une des revendications 1 à 11, caractérisé en ce que les électrodes (9, 10) sont disposées de manière à pouvoir tourner sur le tube de décharge.

# Fig.1

# Fig.2

# Fig.3